# EUROPÄISCHE PATENTSCHRIFT

(11) **EP 2 356 330 B1**
(45) Veröffentlichungstag und Bekanntmachung des Hinweises auf die Patenterteilung: **04.01.2017**
(21) Anmeldenummer: 09760112.4
(22) Anmeldetag: 21.11.2009
(51) Int. Cl.: F02N 11/08

(54) **VERFAHREN ZUM AUTOMATISCHEN ABSCHALTEN EINER BRENNKRAFTMASCHINE**
METHOD FOR AUTOMATICALLY SWITCHING OFF AN INTERNAL COMBUSTION ENGINE
PROCÉDÉ D'ARRÊT AUTOMATIQUE D'UN MOTEUR À COMBUSTION INTERNE

(30) Priorität: 03.12.2008 DE 102008060350
(43) Veröffentlichungstag der Anmeldung: 17.08.2011
(73) Patentinhaber: Bayerische Motoren Werke Aktiengesellschaft, 80809 München (DE)
(72) Erfinder: ALBRECHT, Marc, 80809 München (DE)
(86) Internationale Anmeldenummer: PCT/EP2009/008305
(87) Internationale Veröffentlichungsnummer: WO 2010/063383

(56) Entgegenhaltungen:
- EP-A1- 1 469 195
- JP-A- 2000 002 129
- JP-A- 2004 183 519

## Beschreibung

Die Erfindung bezieht sich auf ein Verfahren zum automatischen Abschalten einer Brennkraftmaschine nach dem Oberbegriff des Patentanspruchs 1.

Derzeitig werden Brennkraftmaschinen meist mittels eines Zündschlüssels durch den Fahrer manuell abgeschaltet. Eine Ausnahme stellt ein Verfahren dar, welches in der DE 100 23 331 A1 vorgestellt wird. Dabei wird anstelle des Zündschlüssels die Bremspedalstellung bzw. der Bremspedaldruck ausgewertet. Der Abschaltvorgang der Brennkraftmaschine wird eingeleitet, wenn nach Erreichen des Stillstands des Kraftfahrzeugs das Bremspedal in seiner bereits betätigten Stellung stärker betätigt wird. Nachteilig ist an derartigen Verfahren, dass alleine der Kraftfahrzeugfahrer für das Abschalten der Brennkraftmaschine verantwortlich ist. Analysen des heutigen Fahrverhaltens zeigen, dass trotz eines gestiegenen Umweltbewusstseins und gestiegener Kraftstoffpreise ein manuelles Abschalten der Brennkraftmaschine, z. B. an Verkehrsampeln, selten eigenständig erfolgt.

Um Kraftstoffverbrauch und Schadstoffemissionen zu reduzieren, werden derzeit Verfahren und Systeme entwickelt und zum Teil auch bereits eingesetzt, welche die Brennkraftmaschine eines Kraftfahrzeugs unter bestimmten Voraussetzungen bzw. bei Vorliegen vorgegebener Abschaltbedingungen automatisch abschalten und bei Vorliegen vorgegebener Anschaltbedingungen automatisch wieder anschalten. Derartige Verfahren und Systeme bzw. Start-Stopp-Einrichtungen sind vor allem für den Stadtverkehr zur Reduzierung des Kraftstoffverbrauchs geeignet, da im Stadtverkehr das Fahrzeug oft an Ampeln oder aufgrund des Verkehrs zum Stehen kommt und der Betrieb der Brennkraftmaschine nicht erforderlich ist.

Zum Beispiel ist aus der EP 0 158 605 B1 eine Vorrichtung bekannt, die abhängig von verschiedenen Bedingungen ein Abstellen bzw. ein erneutes Starten der Brennkraftmaschine bewirkt. Eine Bedingung zum Einleiten eines automatischen Abschaltvorgangs ist beispielsweise, dass die Fahrzeuggeschwindigkeit für eine bestimmte Zeit unterhalb eines Grenzwertes liegen muss, bevor die Brennkraftmaschine automatisch abgestellt wird.

Nachteilig ist an derartigen Verfahren und Vorrichtungen, dass die aktuelle Verkehrssituation nicht berücksichtigt werden kann. Die Brennkraftmaschine wird demzufolge auch in solchen Situationen abgeschaltet, in denen es der Fahrer aus Komfortgründen nicht wünscht. Beispielsweise ist ein automatisches Abschalten der Brennkraftmaschine an einer Abbiegespur oder an einem Stoppschild bei einer sofortigen Weiterfahrtmöglichkeit nicht erwünscht. Insbesondere bei Fahrzeugen mit Automatikgetriebe kann unter der Voraussetzung, dass die Brennkraftmaschine bei einem Bremsvorgang bis in den Stillstand automatisch abgestellt wird, der Fahrer einen automatischen Abschaltvorgang nicht verhindern. Wird als Startsystem ein kostengünstiger Ritzelstarter eingesetzt, ist ein Einspuren, also ein Starten der laufenden Brennkraftmaschine nicht möglich oder mit Komforteinbußen verbunden, da der Ritzelstarter prinzipiell erst wieder bei vollständig abgestellter Brennkraftmaschine einspuren kann. Dadurch ergeben sich ebenfalls unter Umständen längere Startzeiten.

Um dieses Problem zu umgehen, sind bereits Verfahren und Systeme bekannt, bei denen der Fahrer ein automatisches Abschalten verhindern kann.

So offenbart die EP 1 469 195 B1 ein Verfahren zum automatischen Abschalten einer Brennkraftmaschine in einem Fahrzeug, bei dem der Fahrer innerhalb eines vorgegebenen Zeitintervalls nach Erreichen des Stillstands den automatischen Abschaltvorgang verhindern kann. Bspw. wird der automatische Abschaltvorgang nicht eingeleitet, wenn der Fahrer innerhalb des vorgegebenen Zeitintervalls nach Erreichen des Stillstands das Bremspedal verstärkt durchtritt.

Aufgabe der Erfindung ist, ein alternatives Verfahren zum automatischen Abschalten einer Brennkraftmaschine in einem Fahrzeuge mit und ohne Automatikgetriebe anzugeben, welches dem Fahrer bei einem Abbremsen des Fahrzeugs bis in den Stillstand ermöglicht, den automatischen Abschaltvorgang auf einfache und intuitive Weise zu verhindern.

Diese Aufgabe wird erfindungsgemäß durch ein Verfahren nach Patentanspruch 1 gelöst. Vorteilhafte Weiterbildungen sind die Gegenstände der abhängigen Ansprüche.

Das erfindungsgemäße Verfahren zum automatischen Abschalten einer Brennkraftmaschine in einem Kraftfahrzeug (vorzugsweise in einem Kraftfahrzeug mit Automatikgetriebe) mittels einer Start-Stopp-Einrichtung ist prinzipiell derart ausgestaltet, dass die Brennkraftmaschine automatisch abschaltet, wenn (zusätzlich zu den sonstigen vorgegebenen und erfüllten Abschaltbedingungen) das Fahrzeug in den Stillstand abgebremst und für ein vorgegebenes Zeitintervall durch Betätigung des Bremspedals im Stillstand gehalten wurde. Innerhalb des vorgegebenen Zeitintervalls nach Erreichen des Stillstands wird dem Fahrer die Möglichkeit gegeben, das automatische Abschalten zu verhindern. Das automatische Abschalten sollte dann verhindert werden, wenn der Fahrer erkennt, dass eine Weiterfahrt unmittelbar bevorsteht.

Die Erfindung zeichnet sich im Unterschied zu oben genannten Stand der Technik dadurch aus, dass der automatische Abschaltvorgang nicht bereits dann unterbunden wird, wenn der Fahrer das Bremspedal verstärkt durchtritt, sondern erst dann, wenn er dieses nach dem verstärkten Durchtreten zumindest wieder etwas löst, d. h. es wird nicht der Druck- oder Momentenaufbau oder der zurückgelegte Bremspedalweg beim verstärkten Durchtreten des Bremspedals, sondern erst der anschließende Druck- oder Momentenabbau oder der beim anschließenden Lösen des Bremspedals zurückgelegte Bremspedalweg als Trigger zum Verhindern des automatischen Abschaltvorgangs der Brennkraftmaschine ausgewertet. Dadurch soll verhindert werden, dass der automatische Abschaltvorgang bereits dann unterbunden wird, wenn der Fahrer beim Abbremsen in den Stillstand das Bremspedal nur versehentlich stärker durchtritt bzw. übertritt, und ein Verhindern des Abschaltvorgangs gar nicht beabsichtigt ist. Erst das Lösen des Bremspedals aus dem verstärkt durchgedrückten Zustand wird als Aufforderung zum Verhindern des automatischen Abschaltvorgangs gewertet.

Dieses Verfahren ist besonders für Fahrzeuge mit Automatikgetrieben von Vorteil, da hier der Fahrer in der Regel den Gangwahlhebel bei Fahrzeugstillstand in der normalen Position belässt und kein Kupplungspedal vorhanden ist, welches hinsichtlich des Fahrerwunsches ausgewertet werden könnte. Unter dem Begriff Automatikgetriebe sind neben den herkömmlichen Automatikgetrieben auch alle zumindest teilweise automatisierten Getriebe incl. Doppelkupplungsgetriebe zu verstehen (Getriebe mit und ohne Wandler, EGS, SMG). Allerdings ist dieses Verfahren auch bei Fahrzeugen mit Handschaltgetrieben einsetzbar. Die Start-Stopp-Einrichtung kann bspw. ein eigenständiges Steuergerät, oder im Motorsteuergerät integriert sein.

Vorteilhafterweise wird das automatische Abschalten der Brennkraftmaschine erst dann verhindert, wenn das Bremspedal nach verstärktem Durchtreten zumindest um ein vorgegebenes Maß wieder gelöst wird. Dabei kann bspw. die Bremspedalposition oder das aufgebaute Bremsmoment oder die erzeugte Bremskraft ausgewertet werden. Demnach wird das automatische Abschalten der Brennkraftmaschine erst dann unterbunden, wenn das Bremspedal nach verstärktem Durchtreten bis zum Erreichen der ursprünglichen betätigten Bremspedalposition vor dem verstärkten Durchtreten und/oder bis zum Erreichen der ursprünglichen Bremskraft oder des ursprünglichen Bremsmoments vor dem verstärkten Durchtreten gelöst wird. Somit kann das Erkennen des Fahrerwunsches zum Verhindern des automatischen Abschaltvorgangs sichergestellt werden.

Vorteilhafterweise kann dem Kraftfahrzeugfahrer mittels eines Anzeigeelements mitgeteilt werden, sobald er das automatische Abschalten der Brennkraftmaschine verhindern kann. Sind die vorgegebenen Betriebsbedingungen erfüllt, leuchtet bspw. eine LED auf, die dem Fahrer signalisiert, dass die Brennkraftmaschine in Kürze durch die Start-Stopp-Einrichtung abgeschaltet wird. Als Anzeigeelement können aber auch Lautsprecher für ein akustisches Signal oder andere Elemente für optische oder haptische Signale verwendet werden. Ab diesem Zeitpunkt kann der Kraftfahrzeugfahrer das Abschalten der Brennkraftmaschine verhindern.

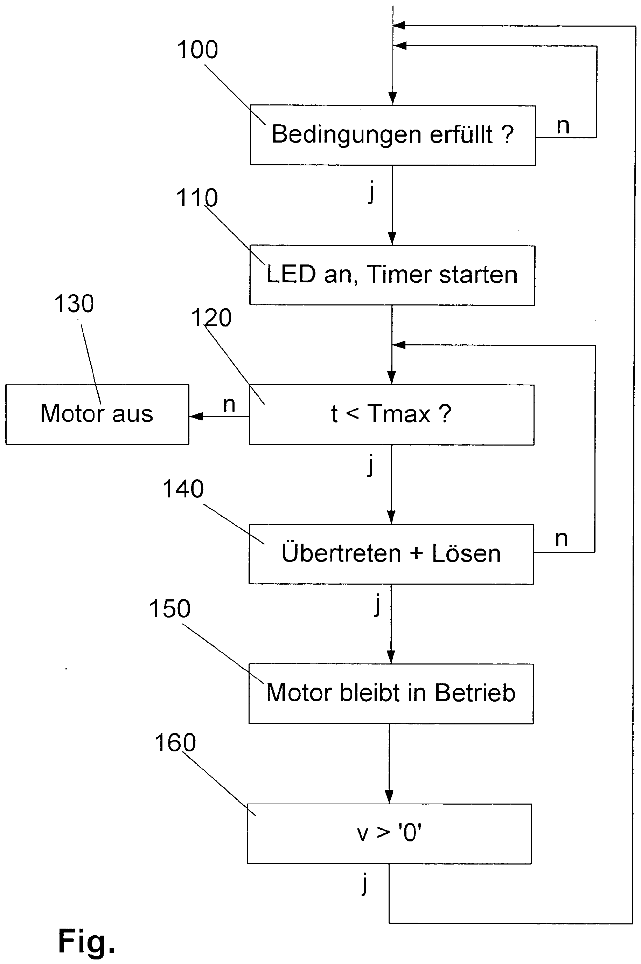

In der Zeichnung ist ein Ausführungsbeispiel der Erfindung dargestellt. Die Fig. zeigt ein vereinfachtes Ablaufdiagramm für das erfindungsgemäße Verfahren am Beispiel eines Kraftfahrzeugs mit Automatikgetriebe.

Das Verfahren zum automatischen Abschalten einer Brennkraftmaschine ist in einer Start-Stopp-Einrichtung oder in einem Steuergerät integriert. In einem ersten Schritt 100 werden alle Bedingungen (Betriebsbedingungen und Zusatzbedingungen), die für ein automatisches Abschalten der Brennkraftmaschine notwendig sind, abgefragt. Hierbei handelt es sich bspw. um die Fahrzeuggeschwindigkeit, die in etwa Null (Stillstand des Fahrzeugs) sein muss, die Drehzahl, die unter einem vorgegebenen Grenzwert liegen muss und das Bremspedal, das betätigt werden muss. Diese Bedingungen werden während des ganzen Verfahrens abgefragt. Nur wenn alle Bedingungen erfüllt sind, wird das Verfahren weiter durchgeführt. Andernfalls wird es abgebrochen und das Verfahren beginnt von vorne.

Sind alle Bedingungen erfüllt, wird in einem zweiten Schritt 110 eine LED als Anzeigeelement eingeschalten. Damit wird dem Kraftfahrzeugfahrer mitgeteilt, dass die Brennkraftmaschine nach einer vorgegebenen Zeit ausgeschalten wird, wenn er dies nicht verhindert. Gleichzeitig wird im Schritt 110 ein Timer gestartet, der die Zeit t überwacht.

Anschließend wird in einem nächsten Schritt 120 die vergangene Zeit t abgefragt. Solange der vergangene Zeit t innerhalb des vorgegebenen Zeitintervalls tmax ist, wird in einem nächsten Schritt 140 überwacht, ob das Bremspedal verstärkt durchgetreten und anschließend wieder bis zur Ursprungslage vor dem Übertreten gelöst wird. Dazu kann bspw. der Bremspedalweg und/oder der Bremsdruck und/oder das Bremsmoment ausgewertet werden. Wenn kein Übertreten und anschließendes Lösen detektiert wird, wird zum Schritt 120 zurückgesprungen und die Zeitüberwachung weiterhin durchgeführt. Wenn die vergangene Zeit t größer als das vorgegebene Zeitintervall tmax ist, wird im Schritt 130 die Brennkraftmaschine automatisch abgeschaltet.

Wird im Schritt 140 aber ein Überdrücken und anschließendes Lösen des Bremspedals bis zur ursprünglichen Ausgangslage detektiert, ist dies das Signal, dass in einem nächsten Schritt 150 das automatische Abschalten der Brennkraftmaschine verhindert wird und die Brennkraftmaschine in Betrieb bleibt. Erst wenn in einem letzten Schritt 160 Gas gegeben wird und die Fahrzeuggeschwindigkeit wieder größer als in etwa Null ist, beginnt das Verfahren von neuem.

## Patentansprüche

1. Verfahren zum automatischen Abschalten einer Brennkraftmaschine in einem Kraftfahrzeug, insbesondere in einem Kraftfahrzeug mit Automatikgetriebe, mittels einer Start-Stopp-Einrichtung, welche die Brennkraftmaschine automatisch abschaltet, wenn das Fahrzeug in den Stillstand abgebremst und für ein vorgegebenes Zeitintervall durch Betätigung des Bremspedals im Stillstand gehalten wurde, wobei der Kraftfahrzeugfahrer innerhalb des vorgegebenen Zeitintervalls nach Erreichen des Stillstands das automatische Abschalten der Brennkraftmaschine verhindern kann, **dadurch gekennzeichnet, dass** ein automatisches Abschalten verhindert wird, wenn detektiert wird, dass der Kraftfahrzeugfahrer innerhalb des vorgegebenen Zeitintervalls das Bremspedal verstärkt durchtritt und anschließend es wieder löst.

2. Verfahren nach Anspruch 1, **dadurch gekennzeichnet, dass** das automatische Abschalten der Brennkraftmaschine dann verhindert wird, wenn das Bremspedal nach verstärktem Durchtreten zumindest bis zum Erreichen der ursprünglichen betätigten Bremspedalposition vor dem verstärkten Durchtreten gelöst wird.

3. Verfahren nach Anspruch 1, **dadurch gekennzeichnet, dass** das automatische Abschalten der Brennkraftmaschine dann verhindert wird, wenn das Bremspedal nach verstärktem Durchtreten zumindest bis zum Erreichen der ursprünglichen Bremskraft oder des ursprünglichen Bremsmoments vor dem verstärkten Durchtreten gelöst wird.

4. Verfahren nach einem der vorangegangen Ansprüche, **dadurch gekennzeichnet, dass** dem Kraftfahrzeugfahrer mittels eines Anzeigeelements mitgeteilt wird, sobald er das automatische Abschalten der Brennkraftmaschine verhindern kann.

## Claims

1. A method for automatically switching off an internal combustion engine in a motor vehicle, more especially in a motor vehicle having an automatic transmission, by means of a start-stop device which automatically switches off the internal combustion engine when the vehicle has been braked to a standstill and is held at a standstill for a predetermined time interval by actuating the brake pedal, wherein the driver of the motor vehicle can prevent the internal combustion engine from automatically switching off upon reaching a standstill within the predetermined time interval, **characterised in that** an automatic switch-off is prevented when it is detected that the driver of the motor vehicle depresses the brake pedal to a greater extent and then releases it again within the predetermined time interval.

2. A method according to claim 1, **characterised in that** the internal combustion engine is prevented from automatically switching off when the brake pedal, after being depressed to a greater extent, is released at least until the original actuated brake pedal position is reached before the brake pedal was depressed to a greater extent.

3. A method according to claim 1, **characterised in that** the internal combustion engine is prevented from automatically switching off when the brake pedal, after being depressed to a greater extent, is released at least until the original braking force or the original braking torque is reached before the brake pedal was depressed to a greater extent.

4. A method according to any one of the preceding claims, **characterised in that** a signalling element informs the driver of the motor vehicle as soon as he can prevent the internal combustion engine from automatically switching off.

## Revendications

1. Procédé pour arrêter automatiquement un moteur à combustion d'un véhicule automobile, notamment un véhicule automobile équipé d'une boîte de vitesse automatique, à l'aide d'une installation marche / arrêt qui arrête automatiquement le moteur à combustion lorsque le véhicule est freiné jusqu'à l'arrêt et le maintiendrait à l'arrêt pendant un intervalle de temps prédéfini par l'actionnement de la pédale de frein,
le conducteur pouvant éviter l'arrêt automatique du moteur à combustion dans l'intervalle de temps prédéfini après avoir atteint l'arrêt automatique,
procédé **caractérisé en ce qu'**
on évite l'arrêt automatique s'il est détecté que le conducteur a actionné de façon renforcée la pédale de freins à l'intérieur de l'intervalle de temps prédéfini et qu'ensuite il a libéré de nouveau la pédale.

2. Procédé selon la revendication 1,
**caractérisé en ce que**
l'arrêt automatique du moteur à combustion est évité si après avoir été actionnée de force, la pédale de freins est libérée jusqu'à atteindre la position d'actionnement d'origine de la pédale avant sont actionnement de force.

3. Procédé selon la revendication 1,
**caractérisé en ce que**
l'arrêt automatique du moteur à combustion est évité si, après avoir été actionné de force, la pédale de freins est libérée jusqu'à atteindre la force de freinage d'origine ou le couple de freinage d'origine avant l'actionnement de force.

4. Procédé selon l'une des revendications précédentes,
**caractérisé en ce que**
le conducteur est informé par un élément d'affichage qu'il peut éviter l'arrêt automatique du moteur à combustion.
